(19) Europäisches Patentamt / European Patent Office / Office européen des brevets

(11) **EP 3 492 213 B1**

(12) **EUROPEAN PATENT SPECIFICATION**

(45) Date of publication and mention of the grant of the patent:
**17.08.2022 Bulletin 2022/33**

(21) Application number: **17834638.3**

(22) Date of filing: **22.06.2017**

(51) International Patent Classification (IPC):
**B23K 26/38** *(2014.01)* **B23K 26/064** *(2014.01)*
**B23K 26/06** *(2014.01)* **B23K 26/067** *(2006.01)*
**B23K 26/70** *(2014.01)*

(52) Cooperative Patent Classification (CPC):
**B23K 26/064; B23K 26/0604; B23K 26/0608; B23K 26/067; B23K 26/38; B23K 26/70**

(86) International application number:
**PCT/KR2017/006602**

(87) International publication number:
**WO 2018/021695 (01.02.2018 Gazette 2018/05)**

(54) **LASER PROCESSING APPARATUS**

LASERVERARBEITUNGSVORRICHTUNG

APPAREIL DE TRAITEMENT AU LASER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.07.2016 KR 20160097206**

(43) Date of publication of application:
**05.06.2019 Bulletin 2019/23**

(73) Proprietor: **Korea Institute of Machinery & Materials**
**Daejeon 34103 (KR)**

(72) Inventors:
• **AHN, Sang Hoon**
**Sejong 30130 (KR)**
• **CHO, Sung-Hak**
**Daejeon 35218 (KR)**
• **CHOI, Jiyeon**
**Seoul 05508 (KR)**
• **KIM, Kyung Han**
**Daejeon 34094 (KR)**
• **SOHN, Hyon Kee**
**Daejeon 34023 (KR)**

(74) Representative: **Germain Maureau**
**12, rue Boileau**
**69006 Lyon (FR)**

(56) References cited:
EP-A2- 1 241 745       JP-A- H0 557 464
JP-A- H0 557 464       JP-A- 2005 224 827
JP-A- 2006 313 858     KR-B1- 101 427 688
KR-B1- 101 442 678     US-A- 5 952 058
US-A1- 2006 257 150    US-A1- 2007 237 475

• BOIVIN L ET AL: "110 channels x 2.35 Gb/s from a single femtosecond laser", IEEE PHOTONICS TECHNOLOGY LETTERS, IEEE SERVICE CENTER, PISCATAWAY, NJ, US, vol. 11, no. 4, 1 April 1999 (1999-04-01), pages 466-468, XP011425882, ISSN: 1041-1135, DOI: 10.1109/68.752550

## Description

### [Technical Field]

The present invention relates to a laser processing apparatus, and more particularly, to a laser processing apparatus, which is capable of performing laser processing with a short time interval. Document JP H05 57464 A discloses a laser beam machine configured to provide a laser pulse light which is allowed to branch into plural optical paths, the machine being provided with a light split delaying means for providing a difference of time for reaching an object to be worked between laser pulses which are allowed to branch, and thereafter, guiding them to the same optical path again.

### [Background Art]

A laser is used for cutting an object-to-be-processed or forming a hole, and a laser beam is formed by a lens and the like and the laser beam having a desired form is emitted to an object-to-be-processed.

The laser beam is emitted with a time interval to improve processability, and when the laser beam is emitted with a short time interval, such as 1 femto second to 100 nano seconds, ablation of about 1.2 times to 1.5 times of that of the case where the laser beam is emitted with a time interval of micro second or more is generated to increase a processing speed.

A laser processing apparatus disposes a plurality of mirrors in a route, in which a laser beam moves, and changes an optical path by using the mirror to vary an emission time of the laser beam emitted to an object-to-be-processed.

However, in order to obtain a desired time interval, it is necessary to adjust an angle and a position of the mirror one by one, thereby generating an alignment error.

Accordingly, it is not easy to control an extremely short time interval, such as 1 femto second to 100 nano seconds, by using the plurality of mirrors.

### [DISCLOSURE]

### [Technical Problem]

The present invention has been made in an effort to provide a laser processing apparatus, which does not generate an alignment error due to a mirror and improves a processing speed.

### [Technical Solution]

An exemplary embodiment of the present invention provides a laser processing according to claim 1.

The plurality of processing beams may include a first processing beam incident to the first optical fiber and a second processing beam incident to the second optical fiber.

The plurality of optical path units may further include at least one third optical path unit positioned in an optical path of the second processing beam, and a third processing beam branched from the second processing beam is incident into the third optical path unit, and the third optical path unit may include third optical fiber having a different length from the lengths of the first optical fiber and the second optical fiber.

The third optical path unit may further include a third polarizing optical system, which branches the third processing beam from the second processing beam, and a fourth polarizing optical system, which transfers the third processing beam and the second processing beam emitted from the second optical path unit to the second polarizing optical system.

Each of the first optical path unit, the second optical path unit, and the third optical path unit may further include a first focusing lens, into which the first processing beam, the second processing beam, and the third processing beam are incident, and the first processing beam, the second processing beam, and the third processing beam may pass through the first focusing lens and then be incident into the first optical fiber, the second optical fiber, and the third optical fiber, respectively.

Each of the first optical path unit, the second optical path unit, and the third optical path unit may further include a collimating lens, into which the first processing beam, the second processing beam, and the third processing beam are incident, and the first processing beam, the second processing beam, and the third processing beam may pass through the first optical fiber, the second optical fiber, and the third optical fiber, respectively, and then be incident to the collimating lens.

The optical combining unit may include a fourth optical fiber, into which the plurality of processing beams is incident, and the plurality of processing beams passing through the fourth optical fiber may be emitted to the same position of the object-to-be-processed.

The optical combining unit may further include a second focusing lens and a third focusing lens, into which the plurality of processing beams is incident, and the fourth optical fiber may be disposed between the second focusing lens and the third focusing lens.

The time difference may be 1 femto second to 100 nano seconds. Another exemplary embodiment not covered by the present invention provides a laser processing apparatus including: an optical generator, which generates a laser beam; a first polarizing optical system, which branches the laser beam into a plurality of processing beams; a plurality of first optical fiber, into which the plurality of processing beams is incident, respectively, a second polarizing optical system, into which the plurality of processing beams passing through the plurality of first optical fiber is incident; and second optical fiber, which is positioned in an optical path of the plurality of processing beams passing through the second polarizing optical system, in which a length of each of the plurality of first optical fiber is different.

The plurality of processing beams may be incident to the second polarizing optical system with a time difference, and the time difference may be 1 femto second to 100 nano seconds.

## [Advantageous Effects]

According to the exemplary embodiment of the present invention, it is possible to easily adjust a time interval with optical fiber, so that an alignment error due to a mirror is not generated, thereby improving processing accuracy.

Further, it is possible to improve a processing speed by emitting a laser beam with a short time interval, such as 1 femto second to 100 nano seconds, without using a mirror.

## [Description of the Drawings]

FIG. 1 is a block diagram schematically illustrating a laser processing apparatus according to an exemplary embodiment of the present invention.

FIG. 2 is a block diagram schematically illustrating a laser processing apparatus according to another exemplary embodiment of the present invention.

FIG. 3 is a graph illustrating a laser pulse of a general laser processing apparatus.

FIG. 4 is a graph illustrating a laser pulse of the laser processing apparatus according to the exemplary embodiment of the present invention.

FIG. 5 is a graph illustrating a laser pulse of the laser processing apparatus according to another exemplary embodiment of the present invention.

FIG. 6 is a graph illustrating a nano hole processing result by the laser processing apparatus according to the exemplary embodiment of the present invention.

FIGS. 7 and 8 are pictures of an actually processed object according to the nano hole processing result illustrated in FIG. 6.

## [Mode for Invention]

In the following detailed description, only certain exemplary embodiments of the present invention have been shown and described, simply by way of illustration. As those skilled in the art would realize, the described embodiments may be modified in various different ways, all without departing from the scope of the present invention as defined by the appended claims.

Accordingly, the drawings and description are to be regarded as illustrative in nature and not restrictive. Like reference numerals designate like elements throughout the specification.

Throughout this specification and the claims that follow, when it is described that an element is "coupled" to another element, the element may be "directly coupled" to the other element or "directly coupled" to the other element through another element. In addition, unless explicitly described to the contrary, the word "comprise" and variations such as "comprises" or "comprising", will be understood to imply the inclusion of stated elements but not the exclusion of any other elements.

Hereinafter, an exemplary embodiment of the present invention will be described in detail with reference to the drawings.

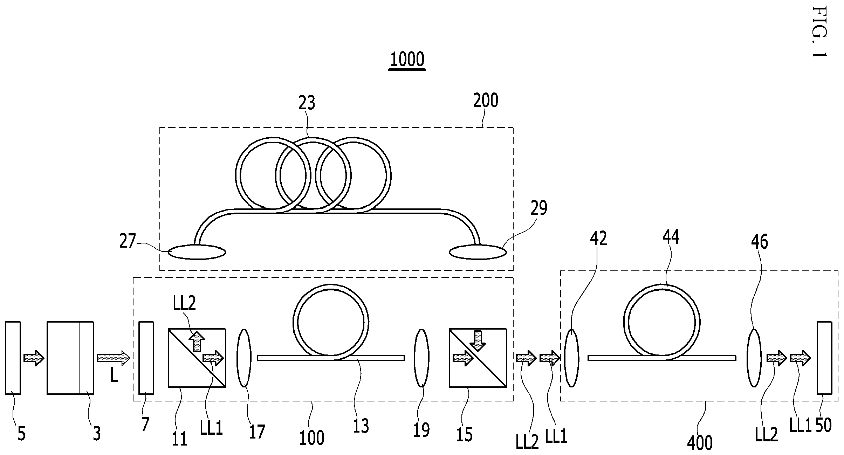

FIG. 1 is a block diagram schematically illustrating a laser processing apparatus according to an exemplary embodiment of the present invention.

As illustrated in FIG. 1, a laser processing apparatus 1000 according to an exemplary embodiment of the present invention includes a light generator 5, a compressor 3, a first optical path unit 100, a second optical path unit 200, and an optical combining unit 400.

The light generator 5 may generate a laser beam L, and the laser beam L may pass through the compressor 3 to have a decreased size. That is, the compressor 3 may concentrate light of the laser beam L to a core of optical fiber, which is to be described below, without loss of light.

The first optical path unit 100 includes a wave plate 7, a first polarizing optical system 11, which divides the laser beam L into a plurality of processing beams, first optical fiber (hollow core photonic crystal fiber) 13, and a second polarizing optical system 15, which transmits the plurality of processing beams to the optical combining unit.

The wave plate 7 is positioned in an optical path of the laser beam transmitted from the optical generator 5, and changes a polarizing direction of the passing laser beam. In this case, the wave plate 7 may be a circular plate form, and be formed to be rotatable.

According to the exemplary embodiment of the present invention, the wave plate 7 may be a half wave plate ($\lambda/2$ wave plate). More particularly, it is possible to adjust a separation rate of two optical components, which are separated while passing through the wave plate 7, by rotating the wave plate 7, and it is possible to adjust a size of energy between the separated optical components. Accordingly, it is possible to improve a processing ability through a laser and improve a processing quality.

However, the wave plate 7 is not limited to the half wave plate ($\lambda/2$ wave plate), and as another example, the wave plate 7 may be a quarter wave plate ($\lambda/4$ wave plate). In this case, the linear polarized laser beam may have circular polarization, and the optical components may be separated in the ratio of 1 : 1.

The first polarizing optical system 11 is positioned in an optical path, through which the laser beam passes, and allows the laser beam to be reflected or to pass by using polarizing to branch the laser beam into two processing beams. For example, the first polarizing optical system may have the form of a plate, which allows polarized light to be reflected or to pass according to an incident angle of the laser beam. Otherwise, the first polarizing optical system may be a regular hexagon formed by bonding two crystals having the form of a prism, and a coating layer is formed on a boundary surface of the prisms. Polarized light parallel to the boundary surface in the laser beam incident to the boundary surface may be reflected with 45°, and polarized light vertical to the boundary surface in the laser beam may pass the first polarizing optical system, so that the laser beam may be branched into two processing beams. By the contrast, the first polarizing optical system may allow the horizontal polarized light to pass and the vertical polarized light to be reflected.

In FIG. 1, the case where the laser beam is branched to the two processing beams is the example for convenience of the description, but the present invention is not limited thereto, and the laser beam may be branched to a greater number of processing beams as necessary. Hereinafter, the two branched beams is referred to as a first processing beam LL1 and a second processing beam LL2, respectively.

The first optical fiber 13 provides an optical path of the first processing beam LL1.

The second optical path unit 200 includes second optical fiber 23 providing an optical path of the second processing beam LL2.

The first optical fiber 13 and the second optical fiber 23 are positioned on the optical paths, which the first processing beam LL1 and the second processing beam LL2 pass, respectively, and transfer light without distortion of the processing beam. The first optical fiber 13 and the second optical fiber 23 are formed to have different lengths, so that the lengths of the optical paths, which the first processing beam LL1 and the second processing beam LL2 pass, are different.

In the meantime, the second polarizing optical system 15 enables the first processing beam LL1 and the second processing beam LL2, which pass the different optical paths, to be incident to the optical combining unit 400 along the same optical path. In this case, the second polarizing optical system 15 may be the same as the first polarizing optical system 11, and may allow the first processing beam LL1 to pass and reflect the second processing beam LL2.

The first processing beam LL1 and the second processing beam LL2, which pass the first optical fiber 13 and the second optical fiber 23, are incident to the second polarizing optical system 15 with a time difference. When the lengths of the first optical fiber 13 and the second optical fiber 23 are different like the present invention, a time for transferring light to an object-to-be-processed may be varied according to a length difference between the first optical fiber 13 and the second optical fiber 23.

The transferring time according to the length of the optical fiber may be calculated by Equation 1 below.

[Equation 1]

$$\Delta l = l_1 - l_2, \qquad \frac{\Delta l}{c} = \Delta t$$

(herein, $l_1$ is a length of the first optical fiber, $l_2$ is a length of the second optical fiber, c is a speed of light in the air, and $\Delta t$ is a time difference between a time of reach of the first processing beam LL1 to the object-to-be-processed and a time of reach of the second processing beam LL2 to the object-to-be-processed)

The time difference between the first processing beam LL1 and the second processing beam LL2 according to the present invention may be 1 femto second to 100 nano seconds. In this case, a core diameter of each of the first optical fiber and the second optical fiber may be 10 $\mu$m to 49 $\mu$m, and a length of each of the first optical fiber and the second optical fiber may be 0.3 $\mu$m to 30 m.

Referring back to FIG. 1, the first optical path unit 100 and the second optical path unit 200 may further include first focusing lenses 17 and 27, respectively, and the first processing beam LL1 and the second processing beam LL2 pass through the first focusing lenses 17 and 27 and then are incident to the first optical fiber 13 and the second optical fiber 23, respectively.

Further, the first optical path unit 100 and the second optical path unit 200 may further include collimating lenses 19 and 29, respectively. The first processing beam and the second processing beam are emitted while passing through the first optical path unit and the second optical path unit, so that the first processing beam and the second processing beam are transformed to straight beams by using the collimating lenses 19 and 29.

The first processing beam LL1 and the second processing beam LL2 pass through the collimating lenses 19 and 29, respectively, and then are transferred to the second polarizing optical system 15.

Emission times of the first processing beam LL1 and the second processing beam LL2 emitted from the first optical fiber 13 and the second optical fiber 23 are different according to the lengths of the first optical fiber 13 and the second optical fiber 23, so that the first processing beam LL1 and the second processing beam LL2 are incident to the second polarizing optical system 15 with the time difference. In this case, the time difference may be calculated by foregoing Equation 1.

The optical combining unit 400 includes a second focusing lens 42, third optical fiber 44, and a third focusing lens 46.

The second focusing lens 42 focuses the first processing beam LL1 and the second processing beam LL2 transferred from the second polarizing optical system 15 and are transferred to the third optical fiber 44. The second focusing lens 42 changes the diameters of the first processing beam and the second processing beam to make the first processing beam and the second processing beam be incident to the third optical fiber 44. For example, the diameter of each of the first processing beam and the second processing beam is 2.5 mm, and may be larger than 10 μm, which is a diameter of a core of the third optical fiber 44, so that the second focusing lens 42 changes the diameter of each of the first processing beam and the second processing beam so that each of the first processing beam and the second processing beam has a diameter smaller than the diameter of the core of the third optical fiber 44.

The third optical fiber 44 provides an optical path, which transfers the processing beams to the object-to-be-processed 50 without distortion of the first processing beam LL1 and the second processing beam LL2. The first processing beam LL1 and the second processing beam LL2 are transferred through the different optical paths, respectively, so that an error may be generated at positions, to which the first processing beam LL1 and the second processing beam LL2 are emitted. Accordingly, like the present invention, the third optical fiber 44 may be installed so that the first processing beam LL1 and the second processing beam LL2 are emitted to the object-to-be-processed through the same optical path without an error. That is, when the plurality of processing beams (for example, the first and second processing beams), which have the time difference, passes through one third optical fiber 44, the plurality of processing beams may be emitted to the same point of the object-to-be-processed, thereby improving processing accuracy. The third focusing lens 46 focuses the laser beam transferred from the third optical fiber 44 and emits the focused laser beam to the object-to-be-processed 50. When an operation of cutting the object-to-be-processed 50 or an operation of forming a hole in the object-to-be-processed 50 is performed through the configuration of the optical combining unit 400, it is possible to remarkably improve processing accuracy.

As described above, when the length of the optical fiber is adjusted like the present invention, it is possible to easily vary the time of the reach of the plurality of processing beams to the object-to-be-processed.

Further, in the present invention, the processing beams are emitted to the object-to-be-processed with a short time difference, such as 1 femto second to 100 nano seconds, only by adjusting the length of the optical fiber, thereby improving a processing speed.

In the meantime, in the foregoing exemplary embodiment, the present invention has been described based on the case where the first optical path unit and the second optical path unit are included as the example, but the present invention is not limited thereto, and may further include a plurality of third optical path units.

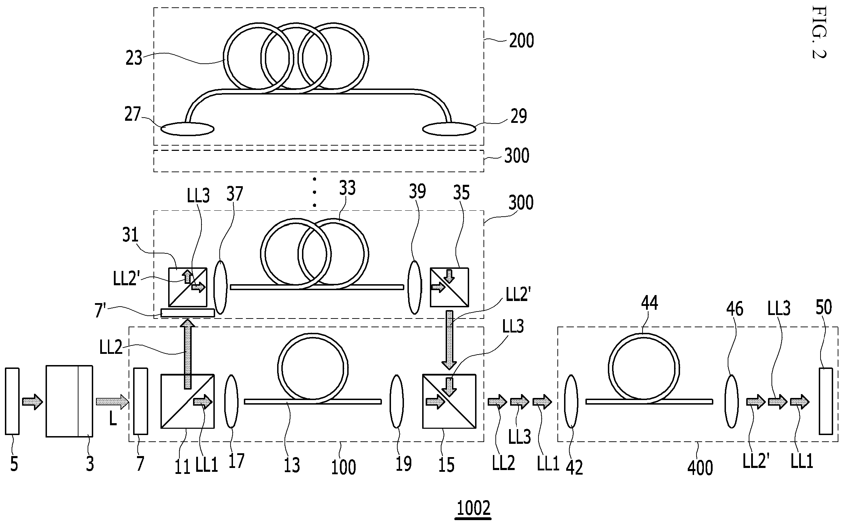

This will be described in detail with reference to FIG. 2.

A laser processing apparatus 1002 of FIG. 2 is mostly the same as that of FIG. 1, so that only different parts will be described in detail.

As illustrated in FIG. 2, the laser processing apparatus 1002 according to another exemplary embodiment of the present invention includes a light generator 5, a first optical path unit 100, a second optical path unit 200, and a third optical path unit 300, which provide different optical paths, and an optical combining unit 400.

The third optical path unit 300 includes a third polarizing optical system 31, fourth optical fiber 33, and a fourth polarizing optical system 35.

The third polarizing optical system 31 branches a processing beam LL2 emitted from the first optical path unit 100 into a third processing beam LL3 incident into the third optical path unit 300 and a second processing beam LL2' incident into the second optical path unit 200.

The third processing beam LL3 is transferred to the fourth fiber 33, which has a different length from those of the first optical fiber 13 and the second optical fiber 23.

A polarizing direction of the processing beam LL2 emitted from the first optical path unit 100 may be changed while the processing beam LL2 passes through a wave plate 7' before being incident to the third polarizing optical system 31. Herein, the wave plate 7' has the same configuration as that of the wave plate 7 of the first optical path unit 100. For example, the wave plate 7' may be formed of a half wave plate, which has a circular plate and is formed to be rotatable, to adjust an energy size between separated optical components.

The fourth polarizing optical system 35 transfers the third processing beam LL3 passing through the fourth optical fiber 33 and the second processing beam LL2' emitted from the second optical path unit 200 to the second polarizing optical system 15.

In the exemplary embodiment of the present invention, the third optical path unit 300 is disposed between the first optical path unit 100 and the second optical path unit 200 and repeatedly branches the processing beams LL2 and LL2' transferred to the second optical path unit 200, thereby generating the greater number of processing beams.

In this case, the plurality of processing beams passes the optical fibers having the different lengths and is incident to an object-to-be-processed with a time difference. The time difference may be calculated by Equation 1.

When the first processing beam LL1, the second processing beam LL2', and the third processing beam LL3 are sequentially emitted to the object-to-be-processed, a time difference between the two continuously emitted processing beams, for example, between the first processing beam LL1 and the third processing beam LL3 or between the third processing beam LL3 and the second processing beam LL2', may be 1 femto second to 100 nano seconds.

In the exemplary embodiment of FIG. 2, a length of the fourth optical fiber 33 is formed to be larger than a length of the first optical fiber 13, and a length of the second optical fiber 23 is formed to be larger than a length of the fourth optical fiber 33, so that the processing beams are emitted to the object-to-be-processed 50 in an order of the first processing beam LL1, the third processing beam LL3, and the second processing beam LL2'.

Hereinafter, a processing effect by the laser processing apparatus according to the exemplary embodiment of the present invention will be described.

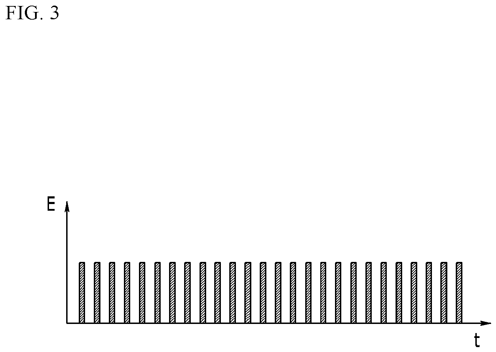

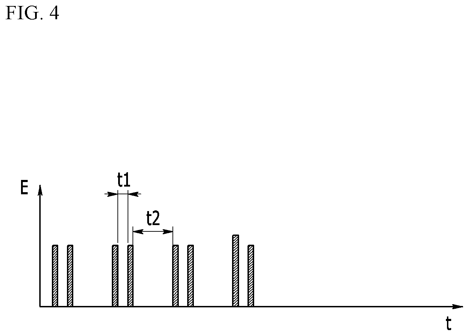

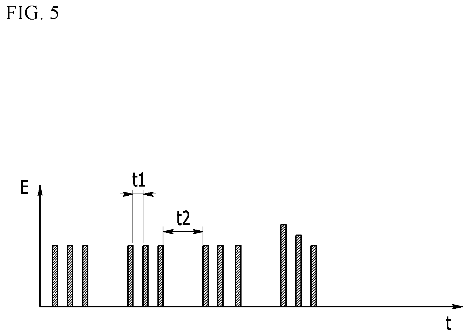

FIG. 3 is a graph illustrating a laser pulse of a general laser processing apparatus, FIG. 4 is a graph illustrating a laser pulse of the laser processing apparatus according to the exemplary embodiment of the present invention, and FIG. 5 is a graph illustrating a laser pulse of the laser processing apparatus according to another exemplary embodiment of the present invention. Bars illustrated in the graphs of FIGS. 3 to 5 represent laser pulses.

Referring to FIG. 3, a general laser processing apparatus generates laser pulses with a predetermined time difference and implements a maximum of 10 nano seconds of a time difference between the laser pulses by using an electric scheme.

However, referring to FIGS. 4 and 5, a laser beam may be branched into a plurality of laser pulses and be emitted in the form of a bundle. In this case, a time difference $t_1$ between the laser pulses (processing beams) may be 1 femto second to 100 nano seconds. Accordingly, it is possible to improve a processing speed and improve processing accuracy.

Further, referring to the rightmost side of each of FIGS. 4 and 5, a size of energy of each of the plurality of laser pulses forming one bundle may be varied. According to the exemplary embodiment of the present invention, it is possible to adjust an optical separation ratio by rotating the wave plates 7 and 7' formed of the half wave plates ($\lambda/2$ wave plates), so that it is possible to adjust a size of energy of each of the plurality of separated laser pulses. Accordingly, it is possible to more precisely process the laser beam. For example, when a size of energy of the first laser pulse among the plurality of laser pulses forming one bundle is increased and the sizes of energy of the subsequent laser pulses are gradually decreased, it is possible to further improve a processing speed and processing accuracy.

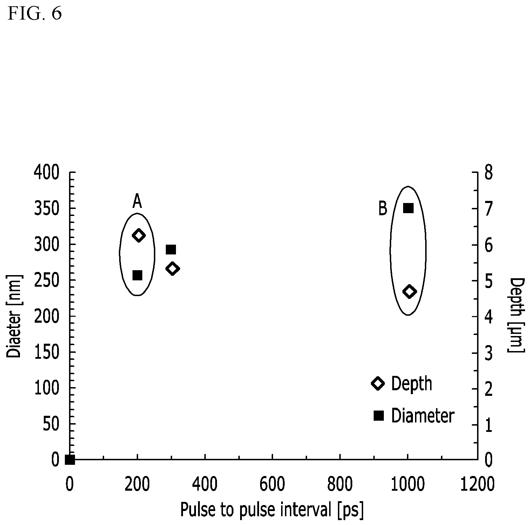

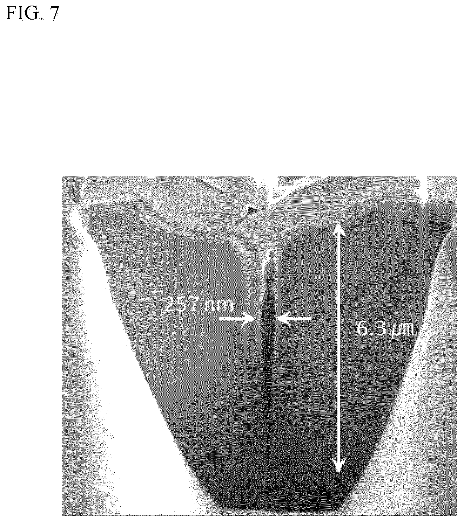

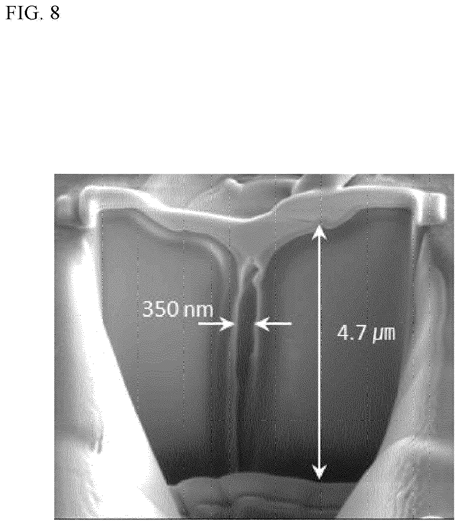

FIG. 6 is a graph illustrating a nano hole processing result by the laser processing apparatus according to the exemplary embodiment of the present invention, and FIGS. 7 and 8 are pictures of an actually processed object according to the nano hole processing result illustrated in FIG. 6. FIGS. 6 to 8 illustrate experimental results obtained by processing a nano hole in a glass substrate by using the laser processing apparatus according to the exemplary embodiment of the present invention, and it is possible to check a processing result according to a time difference between the laser pulses.

In FIG. 6, A represents a result when a time difference between the laser pulses is 200 pico seconds, and B represents a result when a time difference between the laser pulses is 1000 pico seconds. Referring to FIGS. 6 to 8, it is possible to check the result according to the accurate processing of a nano hole having a fine size, which has a diameter of less than 300 nm, in a glass substrate by using the laser processing apparatus according to the exemplary embodiment of the present invention, and it can be checked that as a time difference between the laser pulses is smaller, it is possible to perform more minute and accurate processing.

When the laser processing apparatus according to the exemplary embodiment of the present invention is used, it is possible to easily adjust a time interval of the emission of the laser beam with the optical fiber, thereby improving processing accuracy. Further, it is possible to improve a processing speed by emitting the laser beam with a short time interval, such as 1 femto second to 100 nano seconds.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

**Claims**

1. A laser processing apparatus (1000, 1002), comprising:

   an optical generator (5), which generates a laser beam (L);
   a plurality of optical path units, into which a plurality of processing beams branched from the laser beam (L) is incident, respectively, and which provides different optical paths having a time difference; and
   an optical combining unit (400), which emits the plurality of processing beams passing through the plurality of optical path units to an object-to-be-processed (50),
   wherein the plurality of optical path units includes optical fiber having different lengths, respectively, and
   the optical combining unit (400) allows the plurality of processing beams to pass through the same path,
   wherein the plurality of optical path units includes
   a first optical path unit (100) including first optical fiber (13), and a second optical path unit (200) including second optical fiber (23) having a length
   different from the length of the first optical fiber (13),
   wherein the first optical path unit (100) further includes
   a wave plate (7) positioned in an optical path of the laser beam (L) transmitted from the optical generator (5), the wave plate (7) having a circular plate form and being configured to be rotatable for changing a polarizing direction of the passing laser beam (L),

a first polarizing optical system (11), which branches the laser beam (L) and generates the plurality of processing beams, wherein the wave plate (7) is positioned in the optical path between the optical generator (5) and the first optical polarizing system (11) and

a second polarizing optical system (15), which transfers the plurality of processing beams to the optical combining unit (400).

2. The laser processing apparatus of claim 1, wherein: the plurality of processing beams includes a first processing beam (LL1) incident to the first optical fiber (13) and a second processing beam (LL2) incident to the second optical fiber (23).

3. The laser processing apparatus of claim 2, wherein:

the plurality of optical path unit further includes at least one third optical path unit (300) positioned in an optical path of the second processing beam (LL2), and

a third processing beam (LL3) branched from the second processing beam (LL2) is incident into the third optical path unit (300), and the third optical path unit (300) includes third optical fiber (44) having a different length from the lengths of the first optical fiber (13) and the second optical fiber (23).

4. The laser processing apparatus of claim 3, wherein:

the third optical path unit (300) further includes a third polarizing optical system (31), which branches the third processing beam (LL3) from the second processing beam (LL2), and a fourth polarizing optical system (35), which transfers the third processing beam (LL3) and the second processing beam (LL2) emitted from the second optical path unit (200) to the second polarizing optical system (15).

5. The laser processing apparatus of claim 4, wherein:

each of the first optical path unit (100), the second optical path unit (200), and the third optical path unit (300) further includes a first focusing lens (17, 27), into which the first processing beam (LL1), the second processing beam (LL2), and the third processing beam (LL3) are incident, and

the first processing beam (LL1), the second processing beam (LL2), and the third processing beam (LL3) pass through the first focusing lens (17, 27) and then are incident into the first optical fiber (13), the second optical fiber (23), and the third optical fiber (44), respectively.

6. The laser processing apparatus of claim 5, wherein:

each of the first optical path unit (100), the second optical path unit (200), and the third optical path unit (300) further includes a collimating lens (19, 29), into which the first processing beam (LL1), the second processing beam (LL2), and the third processing beam (LL3) are incident, and

the first processing beam (LL1), the second processing beam (LL2), and the third processing beam (LL3) pass through the first optical fiber (13), the second optical fiber (23), and the third optical fiber (44), respectively, and then are incident to the collimating lens (19, 29).

7. The laser processing apparatus of claim 3, wherein:

the optical combining unit (400) includes a fourth optical fiber (33), into which the plurality of processing beams is incident, and the plurality of processing beams passing through the fourth optical fiber (33) is emitted to the same position of the object-to-be-processed (50).

8. The laser processing apparatus of claim 7, wherein:

the optical combining unit (400) further includes a second focusing lens (42) and a third focusing lens (46), into which the plurality of processing beams is incident, and the fourth optical fiber (33) is disposed between the second focusing lens (42) and the third focusing lens (46).

9. The laser processing apparatus of claim 1, wherein: the time difference is 1 femto second to 100 nano seconds.

**Patentansprüche**

1. Laserverarbeitungseinrichtung (1000, 1002), umfassend:

einen optischen Generator (5), der einen Laserstrahl (L) generiert;
eine Vielzahl von optischen Pfadeinheiten, in die jeweils eine Vielzahl von Verarbeitungsstrahlen, die aus dem Laserstrahl (L) verzweigt sind, einfallen, und die unterschiedliche optische Pfade bereitstellen, die einen Zeitunterschied aufweisen; und

eine optische Vereinigungseinheit (400), die die Vielzahl von Verarbeitungsstrahlen, die durch die Vielzahl von optischen Pfadeinheiten verlaufen, an einen zu verarbeitenden Gegenstand (50) ausgibt,

wobei die Vielzahl von optischen Pfadeinheiten eine optische Faser beinhalten, die jeweils unterschiedliche Längen aufweist, und

die optische Vereinigungseinheit (400) erlaubt, dass die Vielzahl von Verarbeitungsstrahlen durch denselben Pfad hindurchverlaufen,

wobei die Vielzahl von optischen Pfadeinheiten beinhaltet

eine erste optische Pfadeinheit (100), die eine erste optische Faser (13) beinhaltet, und eine zweite optische Pfadeinheit (200), die eine zweite optische Faser (23) beinhaltet, die eine Länge aufweist, die sich von der Länge der ersten optischen Faser (13) unterscheidet,

wobei die erste optische Pfadeinheit (100) weiter beinhaltet

eine Wellenplatte (7), die in einem optischen Pfad des Laserstrahls (L), der aus dem optischen Generator (5) übertragen wird, positioniert ist, wobei die Wellenplatte (7) eine kreisförmige Plattenform aufweist, und konfiguriert ist, um zum Ändern einer Polarisierungsrichtung des hindurchführenden Laserstrahls (L) drehbar zu sein,

ein erstes optisches Polarisierungssystem (11), das den Laserstrahl (L) verzweigt und eine Vielzahl von Verarbeitungsstrahlen generiert, wobei die Wellenplatte (7) in dem optischen Pfad zwischen dem optischen Generator (5) und dem ersten optischen Polarisierungssystem (11) positioniert ist, und

ein zweites optisches Polarisierungssystem (15), das die Vielzahl von Verarbeitungsstrahlen in die optische Vereinigungseinheit (400) überträgt.

**2.** Laserverarbeitungseinrichtung nach Anspruch 1, wobei:
die Vielzahl von Verarbeitungsstrahlen einen ersten Verarbeitungsstrahl (LL1) beinhalten, der in die erste optische Faser (13) einfällt, und einen zweiten Verarbeitungsstrahl (LL2), der in die zweite optische Faser (23) einfällt.

**3.** Laserverarbeitungseinrichtung nach Anspruch 2, wobei:

die Vielzahl von optischen Pfadeinheiten weiter mindestens eine dritte optische Pfadeinheit (300) beinhalten, die in einem optischen Pfad des zweiten Verarbeitungsstrahls (LL2) positioniert ist, und

ein dritter Verarbeitungsstrahl (LL3), der aus dem zweiten Verarbeitungsstrahl (LL2) verzweigt wird, in die dritte optische Pfadeinheit (300) einfällt, und die dritte optische Pfadeinheit (300) eine dritte optische Faser (44) beinhaltet, die eine Länge aufweist, die sich von den Längen der ersten optischen Faser (13) und der zweiten optischen Faser (23) unterscheidet.

**4.** Laserverarbeitungseinrichtung nach Anspruch 3, wobei:

die dritte optische Pfadeinheit (300) weiter beinhaltet

ein drittes optisches Polarisierungssystem (31), das den dritten Verarbeitungsstrahl (LL3) aus dem zweiten Verarbeitungsstrahl (LL2) verzweigt, und

ein viertes optisches Polarisierungssystem (35), das den dritten Verarbeitungsstrahl (LL3) und den zweiten Verarbeitungsstrahl (LL2), die aus der zweiten optischen Pfadeinheit (200) ausgegeben werden, zum zweiten optischen Polarisierungssystem (15) überträgt.

**5.** Laserverarbeitungseinrichtung nach Anspruch 4, wobei:

jede der ersten optischen Pfadeinheit (100), der zweiten optischen Pfadeinheit (200) und der dritten optischen Pfadeinheit (300) weiter eine erste Fokussierlinse (17, 27) beinhaltet, in die der erste Verarbeitungsstrahl (LL1), der zweite Verarbeitungsstrahl (LL2) und der dritte Verarbeitungsstrahl (LL3) einfallen, und

der erste Verarbeitungsstrahl (LL1), der zweite Verarbeitungsstrahl (LL2) und der dritte Verarbeitungsstrahl (LL3) durch die erste Fokussierlinse (17, 27) hindurch verlaufen, und danach jeweils in die erste optische Faser (13), die zweite optische Faser (23) und die dritte optische Faser (44) einfallen.

**6.** Laserverarbeitungseinrichtung nach Anspruch 5, wobei:

jede der ersten optischen Pfadeinheit (100), der zweiten optischen Pfadeinheit (200) und der dritten optischen Pfadeinheit (300) weiter eine Kollimationslinse (19, 29) beinhaltet, in die der erste Verarbeitungsstrahl (LL1), der zweite Verarbeitungsstrahl (LL2) und der dritte Verarbeitungsstrahl (LL3) einfallen, und

der erste Verarbeitungsstrahl (LL1), der zweite Verarbeitungsstrahl (LL2) und der dritte Verarbeitungsstrahl (LL3) jeweils durch die erste optische Faser (13), die zweite optische Faser (23) und die dritte optische Faser (44) hindurch verlaufen, und danach in die Kollimationslinse (19, 29) einfallen.

7. Laserverarbeitungseinrichtung nach Anspruch 3, wobei:

die optische Vereinigungseinheit (400) beinhaltet

eine vierte optische Faser (33), in die die Vielzahl von Verarbeitungsstrahlen einfallen, und die Vielzahl von Verarbeitungsstrahlen, die durch die vierte optische Faser (33) hindurch verlaufen, auf dieselbe Position des zu verarbeitenden Gegenstandes (50) ausgegeben werden.

8. Laserverarbeitungseinrichtung nach Anspruch 7, wobei:

die optische Vereinigungseinheit (400) weiter beinhaltet

eine zweite Fokussierlinse (42) und eine dritte Fokussierlinse (46), in die die Vielzahl von Verarbeitungsstrahlen einfallen, und die vierte optische Faser (33) zwischen der zweiten Fokussierlinse (42) und der dritten Fokussierlinse (46) angeordnet ist.

9. Laserverarbeitungseinrichtung nach Anspruch 1, wobei:
der Zeitunterschied 1 Femtosekunde bis 100 Nanosekunden beträgt.

**Revendications**

1. Appareil de traitement au laser (1000, 1002), comprenant :

un générateur optique (5), qui génère un faisceau laser (L) ;
une pluralité d'unités de chemin optique, sur lesquelles une pluralité de faisceaux de traitement dérivés du faisceau laser (L) sont incidents, respectivement, et qui fournissent différents chemins optiques ayant une différence de temps ; et
une unité de combinaison optique (400), qui émet la pluralité de faisceaux de traitement traversant la pluralité d'unités de chemin optique vers un objet à traiter (50),
dans lequel la pluralité d'unités de chemin optique comprend une fibre optique ayant différentes longueurs, respectivement, et
l'unité de combinaison optique (400) permet à la pluralité de faisceaux de traitement de traverser le même chemin,
dans lequel la pluralité d'unités de chemin optique comprend
une première unité de chemin optique (100) comprenant une première fibre optique (13), et une deuxième unité de chemin optique (200) comprenant une deuxième fibre optique (23) ayant une longueur différente de la longueur de la première fibre optique (13),
dans lequel la première unité de chemin optique (100) comprend en outre
une lame à retard (7) positionnée dans un chemin optique du faisceau laser (L) transmis depuis le générateur optique (5), la lame à retard (7) ayant une forme de plaque circulaire et étant configurée pour pouvoir tourner afin de changer une direction de polarisation du faisceau laser passant (L),
un premier système optique de polarisation (11), qui dérive le faisceau laser (L) et génère la pluralité de faisceaux de traitement, dans lequel la lame à retard (7) est positionnée dans le chemin optique entre le générateur optique (5) et le premier système optique de polarisation (11), et
un deuxième système optique de polarisation (15), qui transfère la pluralité de faisceaux de traitement à l'unité de combinaison optique (400).

2. Appareil de traitement au laser de la revendication 1, dans lequel :
la pluralité de faisceaux de traitement comprend un premier faisceau de traitement (LL1) incident sur la première fibre optique (13) et un deuxième faisceau de traitement (LL2) incident sur la deuxième fibre optique (23).

3. Appareil de traitement au laser de la revendication 2, dans lequel :

la pluralité d'unités de chemin optique comprend en outre au moins une troisième unité de chemin optique (300) positionnée dans un chemin optique du deuxième faisceau de traitement (LL2), et
un troisième faisceau de traitement (LL3) dérivé du deuxième faisceau de traitement (LL2) est incident sur la troisième unité de chemin optique (300), et la troisième unité de chemin optique (300) comprend une troisième fibre optique (44) ayant une longueur différente des longueurs de la première fibre optique (13) et de la deuxième fibre optique (23).

4. Appareil de traitement au laser de la revendication 3, dans lequel :

la troisième unité de chemin optique (300) comprend en outre
un troisième système optique de polarisation (31), qui dérive le troisième faisceau de traitement (LL3) à partir du deuxième faisceau de traitement (LL2), et

un quatrième système optique de polarisation (35), qui transfère le troisième faisceau de traitement (LL3) et le deuxième faisceau de traitement (LL2) émis de la deuxième unité de chemin optique (200) vers le deuxième système optique de polarisation (15).

**5.** Appareil de traitement au laser de la revendication 4, dans lequel :

chacune de la première unité de chemin optique (100), de la deuxième unité de chemin optique (200) et de la troisième unité de chemin optique (300) comprend en outre une première lentille de focalisation (17, 27), sur laquelle le premier faisceau de traitement (LL1), le deuxième faisceau de traitement (LL2), et le troisième faisceau de traitement (LL3) sont incidents, et

le premier faisceau de traitement (LL1), le deuxième faisceau de traitement (LL2), et le troisième faisceau de traitement (LL3) traversent la première lentille de focalisation (17, 27) et sont ensuite incidents sur la première fibre optique (13), la deuxième fibre optique (23), et la troisième fibre optique (44), respectivement.

**6.** Appareil de traitement au laser de la revendication 5, dans lequel :

chacune de la première unité de chemin optique (100), de la deuxième unité de chemin optique (200), et de la troisième unité de chemin optique (800) comprend en outre une lentille de collimation (19, 29), sur laquelle le premier faisceau de traitement (LL1), le deuxième faisceau de traitement (LL2), et le troisième faisceau de traitement (LL3) sont incidents, et

le premier faisceau de traitement (LL1), le deuxième faisceau de traitement (LL2), et le troisième faisceau de traitement (LL3) traversent la première fibre optique (13), la deuxième fibre optique (23) et la troisième fibre optique (44), respectivement, et sont ensuite incidents sur la lentille de collimation (19, 29).

**7.** Appareil de traitement au laser de la revendication 3, dans lequel :

l'unité de combinaison optique (400) comprend une quatrième fibre optique (33), sur laquelle la pluralité de faisceaux de traitement sont incidents, et

la pluralité de faisceaux de traitement traversant la quatrième fibre optique (33) sont émis vers la même position de l'objet à traiter (50).

**8.** Appareil de traitement au laser de la revendication 7, dans lequel :

l'unité de combinaison optique (400) comprend en outre

une deuxième lentille de focalisation (42) et une troisième lentille de focalisation (46), sur lesquelles la pluralité de faisceaux de traitement sont incidents, et

la quatrième fibre optique (33) est disposée entre la deuxième lentille de focalisation (42) et la troisième lentille de focalisation (46).

**9.** Appareil de traitement au laser de la revendication 1, dans lequel :
la différence de temps est de 1 femto seconde à 100 nano secondes.

FIG. 1

FIG. 2

FIG. 3

FIG. 4

FIG. 5

FIG. 6

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0557464 A